# EUROPEAN PATENT APPLICATION

(11) **EP 1 507 368 A1**
(43) Date of publication of application: **16.02.2005**
(21) Application number: 03292033.2
(22) Date of filing: 13.08.2003
(51) Int. Cl.: H04L 12/56

(54) **High speed pipeline architecture with high update rate of associated memories**

(71) Applicant: ALCATEL, 75008 Paris (FR)
(72) Inventor: Arts, Francis Luc Mathilda, 2370 Arendonk (BE); Verhelst, Pierre Alfons Leonard, 2610 Wilrijk (BE); Dornon, Olivier Jean-Claude, 9940 Ertvelde (BE)
(74) Representative: Plas, Axel

(57) **Abstract**

A high speed pipeline architecture comprising a plurality of successive processing stages or pipestages (Stage 1 - n) coupled in cascade to forward user packets of data. Each pipestage is adapted to be coupled to at least one memory unit (Data 1 - n) storing a forwarding table. The memory unit is preferably of the RDRAM memory technology, and the forwarding table preferably an IP packet forwarding table.

A data manager (DM) is used to update the memory units by transferring maintenance data through the pipestages. Since the maintenance actions on the memory units are passed through the same pipeline that forwards the user packets, these operations are mutually ordered and high update rates on the memory units can be achieved without losing any incoming user packets.

## Description

The present invention relates to a high speed pipeline architecture comprising a plurality of successive processing stages coupled in cascade, each processing stage being further adapted to be coupled to at least one memory unit for exchanging data therewith, and a data manager adapted to update memory data in said memory units.

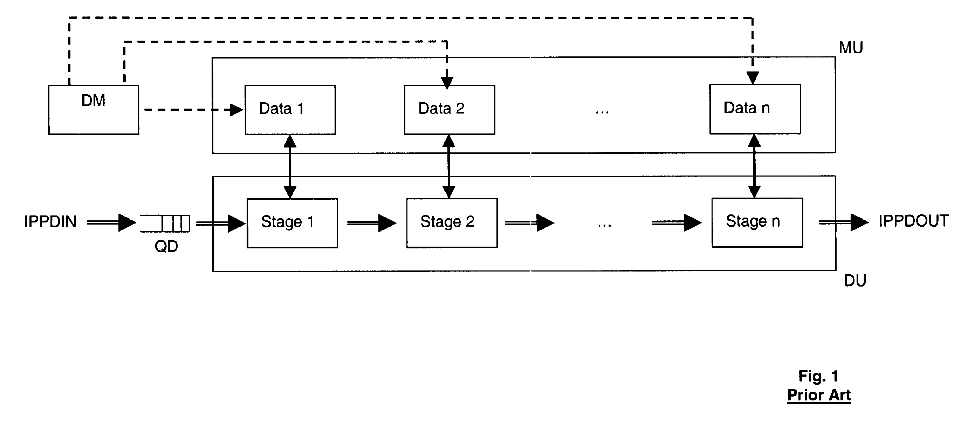

Such a high speed pipeline architecture is already known in the art, e.g. as data forwarding device to forward user data through the processing stages, also called "pipestages", as it is represented in Fig. 1. Therein, user data arriving at an input IPPDIN is forwarded at high speed through processing stages, such as Stage 1, Stage 2, ... , Stage n, until an output IPPDOUT. In each stage, memory data may be exchanged with one or more of the memory units, Data 1, Data2, ... , Data n, coupled to that stage. It is to be noted that, although the bi-directional arrows of Fig. 1 only represent possible memory data exchange between Stage i and Data i, with i between 1 and n, any pipestage may but does not have to exchange data with any memory unit. Additionally to these operations, the memory units are updated under control of a data manager DM.

In this known pipeline architecture, it is hard to achieve a high rate of maintenance actions on the memory units. In other words, it is not easy to add, delete and update the memory data in the memory units without losing incoming user data. Indeed, the maintenance actions performed by the data manager on the one hand and the pipestages that read or write on the other hand, both access the memory units without mutual synchronization. At high speeds, the spacing in time of all the memory accesses is critical for the performance of the pipeline. The known solution does not achieve this spacing in time between the maintenance actions and the use of the memory units by the pipeline stages. This implies that scaling to higher update rates of the memory units is only possible at the expense of increased user data loss. Conversely, user data loss can only be avoided by keeping the rate of maintenance actions on the memory units low.

An object of the present invention is to provide a high speed pipeline architecture of the above known type but which allows to scale to high update rates on the memory units without losing incoming user data or, conversely, wherein user data loss is avoided, even with high update rates of the memory units.

According to the invention, this object is achieved due to the fact that said data manager is adapted to update said memory data in the memory units through said cascade coupled processing stages of the pipeline architecture.

In this way, the maintenance actions on the memory units are passed through the same pipeline that forwards the user data. This provides a mutual ordering between the memory accesses needed for update and for forwarding purposes respectively.

In more detail, the embodiment of the present invention is further characterized in that said pipeline architecture further comprises first ordering means to control the transfer of user data through the processing stages, and second ordering means to control the transfer of the memory data to said memory units.

Although the filling of these two ordering means occurs independently, the serving of these ordering means may be synchronized.

In a preferred embodiment, the present pipeline architecture is characterized in that said user data is arranged in user packets and in that said memory data is arranged in maintenance packets.

In this way, the pipeline architecture is a high speed packet forwarding device allowing a high update rate of the associated memory units.

Another characterizing embodiment of the present invention is that at least one of said memory units is a Rambus Dynamic Random Access Memory [RDRAM].

This allows achieving the requested high speed. Although RDRAM memory technology is preferred, RDRAM memory units may coexist or may be combined with memory units in other memory technologies, e.g. SRAM.

Also another characterizing embodiment of the present invention is that said memory units contain Internet Protocol [IP] packet forwarding tables.

IP packet forwarding tables are preferred for the present application, but the invention is obviously also applicable to other types of tables.

Further characterizing embodiments of the present high speed pipeline architecture are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a high speed pipeline architecture as known in the art; and
Fig. 2 shows a high speed pipeline architecture according to the invention.

The high speed pipeline architecture shown at Fig. 1, and known in the art, is for instance used in a telecommunication system for transmitting incoming Internet Protocol [IP] user data arranged in packets from a pipeline input IPPDIN to a pipeline output IPPDOUT. The architecture of the pipeline comprises successive processing stages Stage 1, Stage 2, ... , Stage n coupled in cascade and called "pipestages". Prior to be transferred to the pipeline, the IP user packets arriving at the input IPPDIN are latched in a queue or buffer QD. The IP user packets are forwarded at high speed through pipestages until the output IPPDOUT. In each processing stage, data may be exchanged with one or more memory units, Data 1, Data2, ... , Data n, coupled to that stage. The memory units preferably contain IP forwarding tables updated under control of a data manager DM and the exchange by the processing stage consists of reading data from one or more memory units or writing data to them. It is to be noted that, although the bi-directional arrows of Fig. 1 only represent possible memory data exchange between Stage i and Data i, with i between 1 and n, any pipestage may but does not have to exchange data with any memory unit

For achieving the high speed requirements, the memory units Data 1 to Data n are preferably based on the Rambus Dynamic Random Access Memory [RDRAM] technology. However, other memory technologies may be used. These other memory technologies, such as SRAM, may be combined or coexist with the RDRAM.

In more detail, each memory unit consists of a Random Access Memory [RAM], a RAM controller, and a bus or path connecting the RAM to a data manager DM. For maintenance purpose, the data manager DM regularly updates the memory units Data 1 to Data n. The data manager DM may be implemented in hardware [HW] or preferably in software [SW]. When the data manager DM is implemented in SW, the latter runs on a HW component that has a connection to the memory unit. The connection between the RAM and the data manager DM may be dedicated to the use between these two. Or alternatively, parts of the connection may be common with other paths/ other interactions on the chip.

In the prior-art solution of Fig.1, the maintenance actions and the IP forwarding pipeline act unsynchronized on the IP forwarding tables. As a result, collision can occur whereby user packets may be lost. The collisions result in an extended time before the data read from the memory returns. This implies that the pipeline during that time interval is not keeping up with the pace at which new packets are offered to the pipeline.

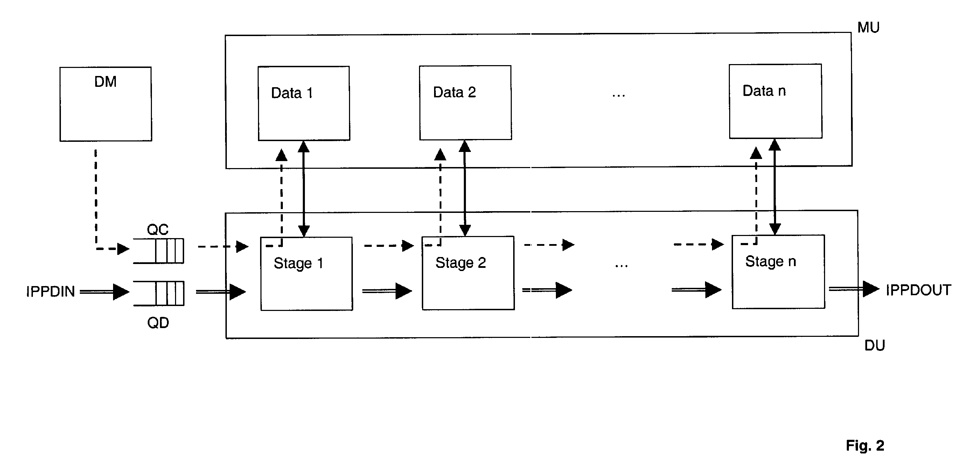

A high speed pipeline architecture according to the invention is shown at Fig. 2. Therein, as it will be explained below, both the maintenance actions and the IP forwarding pipeline are synchronized or ordered because they are running through the same pipeline.

In the following part of the description a preferred embodiment is considered wherein user data is arranged in packets and wherein Rambus Dynamic Random Access Memory [RDRAM] technology is used for the memory units. The pipeline architecture thereby relates to a packet forwarding device operating at a speed of 10 Gb/s, but is also applicable to other, higher or lower, speeds. At 10 Gb/s and with packets of which the shortest size is 40 bytes, the IP packets come in every 36 ns. On the other hand, the RDRAM technology imposes that the memory accesses to the same or adjacent banks have to be spaced in time at least 67.5 ns apart.

The memory units preferably contain IP packet forwarding tables, but other types of tables may also be used. As well known by a person normally skilled in the art, 2 copies of the IP forwarding tables are stored in the memory units to guarantee deterministically that no bank collisions on the RDRAM memories occur. Each copy is accessed every 2 x 36 = 72 ns. Since the margin is very small (72 ns - 67.5 ns = 4.5 ns), an ordered scheme to access the memory units that holds the IP forwarding tables is essential in order to achieve high update rates without disturbing the wire rate forwarding performance.

This ordering is achieved by passing both sets of actions through the same pipeline. If the pipeline has to make an update on the IP forwarding table, it takes this action in the same stage of its pipeline as where it would have read that data structure to forward an IP packet. To this end, 2 queues QD and QC are located in front of the pipeline in order to provide sufficient elasticity to buffer update requests from the data manager DM and IP packets while serving an update request or an IP packet respectively. In other words, the maintenance flow from the data manager DM is inserted into the user data flow from IPPDIN at the input of the pipeline architecture. The 2 queues QD and QC are obviously synchronized so that only one packet of either user data or maintenance is transmitted at a time to the pipeline. Any packet loss is thereby avoided. In other words, since the maintenance actions on the memory units are passed through the same pipeline that forwards the user packets, these operations are mutually ordered and high update rates on the memory units can be achieved without losing any incoming user packets.

A final remark is that embodiments of the present invention are described above in terms of functional blocks. From the functional description of these blocks, given above, it will be apparent for a person skilled in the art of software and design of electronic devices how embodiments of these blocks can be manufactured with well-known software and electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A high speed pipeline architecture comprising a plurality of successive processing stages (Stage 1, Stage 2, ... , Stage n) coupled in cascade, each processing stage being further adapted to be coupled to at least one memory unit (Data 1, Data2, ... , Data n) for exchanging data therewith, and a data manager (DM) adapted to update memory data in said memory units,
***characterized in that*** said data manager (DM) is adapted to update said memory data in the memory units (Data 1, Data2, ... , Data n) through said cascade coupled processing stages (Stage 1, Stage 2, ... , Stage n) of the pipeline architecture.

2. The pipeline architecture according to claim 1, ***characterized in that*** said pipeline architecture further comprises first ordering means (QD) to control the transfer of user data through the processing stages (Stage 1, Stage 2, ... , Stage n), and second ordering means (QC) to control the transfer of the memory data to said memory units (Data 1, Data2, ... , Data n).

3. The pipeline architecture according to claim 2,
***characterized in that*** said user data is arranged in user packets,
*and **in that*** said memory data is arranged in maintenance packets.

4. The pipeline architecture according to claim 3,
***characterized in that*** said first ordering means (QD) is a first data queue in front of said cascade coupled processing stages (Stage 1, Stage 2, ... , Stage n) for buffering said user packets,
*and **in that*** said second ordering means (QC) is a second data queue also in front of said cascade coupled processing stages for buffering said maintenance packets, said second ordering means being controlled by said data manager (DM).

5. The pipeline architecture according to claim 1, ***characterized in that*** at least one of said memory units (Data 1, Data2, ... , Data n) is a Rambus Dynamic Random Access Memory [RDRAM].

6. The pipeline architecture according to claim 1, ***characterized in that*** said memory units (Data 1, Data2, ... , Data n) contain Internet Protocol [IP] packet forwarding tables.
